# EUROPEAN PATENT APPLICATION

(11) **EP 0 865 912 A1**
(43) Date of publication of application: **23.09.1998**
(21) Application number: 98104780.6
(22) Date of filing: 17.03.1998
(51) Int. Cl.: B32B 27/32, C08K 5/00, C08J 5/18, B32B 27/18

(54) **Polymeric films**

(30) Priority: 18.03.1997 GB 9705544
(71) Applicant: Hoechst Trespaphan GmbH, 66539 Neunkirchen (DE)
(72) Inventor: Davidson, Paul Malcolm Mackenzie, Elcombe, Swindon SN4 0NW (GB); Biddiscombe, Helen Ann, North Petherton, Bridgwater TA6 6SN (GB); Govier, Rebecca Karen, Abbey Meads, Swindon SN2 3YB (GB); Ott, Marc Fritz Manfred, Wootton Bassett, Swindon SN4 8LJ (GB)
(74) Representative: Luderschmidt, Schüler & Partner GbR

(57) **Abstract**

Biaxially oriented polyolefin film having a thickness of at least 50µm including a layer of a polypropylene based polymer resin having rnicrovoids therein, the microvoids having been formed by stretching a web containing the beta-form of polypropylene at an area stretch ratio of at least 15:1. These films have shown good performance characteristics during film conversion, for example, printing.

## Description

This invention concerns biaxially oriented polyolefin films, and in particular thick biaxially oriented polypropylene films, and methods of making and using such films.

Polypropylene films have found wide acceptance for many end uses such as packaging and labelling due to their desirable physical properties, especially after biaxial orientation. It is, of course, important that such films not only have the desired properties for their eventual end use but that they have characteristics which enable them to be processed satisfactorily in packaging and labelling machines. More particularly, it is important that the thickness of these films falls within close tolerance limits in order to improve conversion efficiency, for example, in printing them and using them in packaging.

Gauge variation is potentially a problem with biaxially oriented polypropylene films in general, and it tends to be a particular problem with relatively thick films having a core layer of a propylene homopolymer, for example, those containing microvoids formed as a result of using a phase distinct voiding agent. Such films are especially used to form labels, and they in general have thicknesses of at least 50µm.

It is an object of the present invention to provide polyolefin films, particularly polypropylene films, that are of increased thickness and have advantageous characteristics.

It is also an object of the present invention, to provide methods of making and using such films.

In accordance with these and other objectives, there has been provided, in accordance with the present invention, a biaxially oriented polyolefin film having a thickness of at least 50 µm comprising a layer of a polypropylene-based polymer resin having microvoids therein, the microvoids having been formed by stretching a web containing the beta-form of polypropylene at an area stretch ratio of at least 15:1.

In accordance with the present invention there is also provided a process for forming the film comprising forming a film comprising a layer of the beta-form of polypropylene, and biaxially orienting the film at an area stretch ratio of at least 15:1 to form the microvoids.

There is also provided in accordance with the invention a biaxially oriented polyolefin film having a thickness of at least 50 µm comprising an opaque layer of a polypropylene-based polymer resin that includes no void-iniating external particles and no opacifying pigments.

Further objects, features, and advantages of the present invention will become apparent from the detailed description that follows.

According to the present invention there is provided a biaxially oriented polyolefin film having a thickness of at least 50µm comprising a layer of a polypropylene-based resin having microvoids therein, the microvoids having been formed by stretching a web containing the beta-form of polypropylene at an area stretch ratio of at least 15:1.

"Polypropylene-based resin" or "polypropylene-based polymer" and "Polypropylene" are used anonymously. These terms shall mean polymers containing at least 50 % by weight, based on the weight of the polymer, of propylene units.

"Web" shall mean a sheet like extrudate resulting from extruding the respective polymer melt or melts through a slot die and subsequent cooling of the melt to form the unoriented film.

"Base layer" shall mean either "the layer" in case of a monolayered film or the thickest layer, generally being the innermost, central layer of the multilayer structure.

"Beta form of polypropylene" shall mean that crystalline modification of polypropylene which has a lower melting point and a lower density than the common alpha form of propylene.

"Microvoids" shall mean the hollow vacuoles in the polymer matrix reducing the density of the oriented polypropylene film wherein the reduced density is lower than that of a corresponding film without any voids.

Films in accordance with the present invention have shown particularly low variation in thickness when compared with similar films in which voiding has been produced using chalk or calcium carbonate.

The beta-form of polypropylene is relatively unstable compared with the corresponding alpha-form under the conditions usually used to produce polypropylene films. Thus when melts of polypropylene are extruded and then cooled to form a polymeric film, which may then subsequently be stretched, the alpha-form of polypropylene tends to predominate. However, it is known to produce films using polypropylene containing high concentrations of the beta-form of polypropylene by mixing polypropylene containing a high proportion of the alpha-form with a suitable nucleating agent which induces the formation of high concentrations of the beta-form when it is molten and subsequently cooled.

One example of such a process is described in U.S. Patent No. 4,366,129, which is herein incorporated by reference in its entirety, in which a variety of so-called beta-nucleators are dispersed in polypropylene following which films are produced therefrom by melting and subsequent cooling, the crystallinity of the resulting cast films being controlled by appropriate adjustment of the cooling conditions. Selective extraction of the beta-form of the polypropylene from the films leaving a matrix of the alpha-form is then used to impart porosity to the films.

U.S. Patent No. 5,231,126, which is herein incorporated by reference in its entirety, describes the use of two component mixtures of beta-nucleating agents to produce microporous films by mono- or biaxial stretching cast polypropylene webs containing a high concentration of the beta-form of polypropylene resulting from the use of the mixture of nucleating agents. It is believed that the porosity results from voids induced by the change of the beta-form into the alpha-form during the stretching process, the alpha-form having a higher density than the beta-form from which it is derived. The development of porosity during the stretching process is accompanied by a significant reduction in apparent film density and the films become opaque with a high degree of whiteness.

More recently it has been proposed in EP 0632095, which is herein incorporated by reference, to use a variety of organic amides as beta-nucleating agents in the formation of mono- and biaxially stretched polypropylene films. Hence, a melt of a mixture of polypropylene and the nucleating agent is cast into a film web which is allowed to crystallize at a temperature of 15 to 140°C to form a solid web containing the beta-form of polypropylene, following which the web is mono- or biaxially stretched at a temperature above 20°C but less than the melting point of the beta-form crystals in the web. The resulting stretched films are said to have high whiteness and hiding power combined with printability and writeability.

Microvoid formation during the plastic deformation of the beta-form of polypropylene is also described in the journal POLYMER (Vol. 35, No. 16, pp. 3442-5, 1995; and Vol. 36, No. 13, pp. 2523-30, 1995 which is herein incorporated by reference in its entirety). Porosity is said to increase with higher crystallization and lower stretching temperatures, all samples containing the beta-form apparently becoming opaque when stretched at temperatures below 120-130°C.

In the present invention, the polypropylene-based resin or polypropylene based polymer can be any resin or polymer containing propylene units, generally at least 50% by weight of propylene units, preferably 80-100% by weight of propylene, for example 95-100% by weight of propylene, in each case based on the total polymer weight. The polypropylene-based polymer is preferably a propylene homopolymer or a random or block copolymer or terpolymer containing a major proportion (80-100wt%) of units derived from propylene, the remainder being ethylene or butylene and having a crystallinity of at least 40%, preferably 50 to 90%. Usually the polypropylene based polymer has a melting point of 140-170°C, preferably 155-165°C and a melt flow index (DIN 53 735 at 21,6 N and 230°C) of 1.0 - 10 g/10min, preferably 1.5-6.5 g/10min. Most preferred is isotactic propylene homopolymer containing about 100% propylene units and a melting point of 160-162°C.

The nucleating agent used to induce the formation of the beta-form of the polypropylene of the base layer can be selected from those proposed hitherto for the purpose. Any desired nucleating agent or agents can be used. However, particularly good results have been achieved using amides as proposed in EP 0632095, and more particularly, N,N'-dicyclohexyl-2, 6-naphthalene dicarboxamide.

The amount of nucleating agent used to induce the formation of the beta-form of polypropylene can be varied to give the desired amount of beta-form, for example, from 0.0001 to 5 wt%, preferably from 0,001 to 2 % wt% of the nucleating agent based on the weight of polypropylene, as described in EP 0632095, preferred amounts being from 0.001 to 1 wt%. The amount of beta-form in the polypropylene should be suffice to forms voids upon stretching of the film, to give a film of the desired opaquences.

Films in accordance with the present invention can consist of a single layer of a polypropylene-based resin containing microvoids. Often the film will include one or more further layers, for example, to impart particular properties to the film such as gloss, printability. and/or heat sealability. The films can, for example, include an outer layer and/or intermediate layers which confers such properties. Any desired materials can be used to form the optional additional layers. Such further layers are preferably formed from polyolefins. Examples of polymers which can be used for the purpose include polymers containing units derived from one or more of ethylene. propylene, butene-1, and higher aliphatic alpha-olefins, and mixtures of such polymers. The further layers can also be formed from modified polyolefins, for example. polyolefins extended with unsaturated acids and their derivatives. *e.g*., ionomers and anhydrides. Other further layers which can be used can be formed from acrylic polymers.

Although only one surface of the voided polypropylene layer may have a further layer thereon, the other surface of the voided polypropylene-based resin layer can also have at least one further layer thereon. For example, a heat sealable layer which can be the same as or different from the optional layer on the other surface of the films can be used. Preferred materials for this layer can be selected from polymers referred to above.

Films in accordance with the present invention can include one or more additives used in the polyolefin art, for example, slip agents, antistatic agents, antiblock agents. neutralizing agents, stabilizers, UV absorbers, or pigments. such additives when present, preferably being present in amounts which do not significantly adversely affect the ability of polypropylene to crystallize in its beta-form. When additives are present. they can be added to one or more of the layers of which the film is constructed.

In accordance with the invention, no external additives, such as calcium carbonate or other void- initiating particles like polyethylene terephtalate (PET) or titanium dioxide or other white pigrnents are needed to give an opaque film. External additives are additives other than polypropylene and being incompatible with polypropylene and causing formation of voids upon stretching.

Films in accordance with the present invention have thicknesses of at least 50µm, preferably, at least 52-400µm for example at least 65-200µm and they can be considerably thicker, for example, 80-150µm or more.

Films in accordance with the present invention can be produced using known methods, for example, by extrusion or coextrusion through a slot die of melts of the appropriate polymers for the layer or layers which may be desired, to form a polymer web which is cooled and thereafter sequentially biaxially stretched at an area stretch ratio of at least 15:1.

If a single layer film is desired only one polymer sheet is extruded to form a single layer web. If a multilayer structure is desired the respective polymer melts are coextruded to form a multilayer web. However, the outer layer or layers, if used, alternatively can be applied to the voided polypropylene-based resin by coating after the voided layer has been formed.

It is generally desirable to carry out certain of the processing steps, particularly the initial crystallization of the polypropylene from a melt containing the beta-form nucleating agent, under conditions which will bring about the formation of the desired film structure. More particularly, the cooling should be effected under conditions such that the beta-form of polypropylene is produced and void formation can occur during subsequent stretching of the films.

The cooling or crystallization temperature used to induce the formation of the beta-form of polypropylene in the base layer of films of the present invention prior to their being stretched should generally be at least 20°C, but less than the melting point of the beta-form of polypropylene. Although temperatures at the lower end of this range, for example, up to 50°C, can be used, it is generally preferred to use temperatures of at least 7O°C, and higher temperatures still are often preferred, for example 90°C or more. However, the cooling temperature is preferably not more than 140°C, and from practical considerations it is preferably below the temperature at which the film sticks to surfaces used to cool it.

Cooling of the melt can be effected in air of a suitable temperature, but it is generally preferred to effect cooling by contacting the extruded web with a cooling surface, for example, a chill roll or by immersing the extruded web into a cooling liquid.

Subsequent biaxial stretching of the cooled web is preferably effected sequentially, for example, under conditions known in the polypropylene film art. Sequential stretching enables the conditions used in the two directions to be selected independently of each other. Stretching in the direction of extrusion (the machine direction) will usually be effected before stretching in the transverse direction.

The area stretch ratio of films of the present invention should be at least 15:1, and it will often be considerably more, for example, at least 20:1. Excessively large stretch ratios can give rise to difficulties in film production, and the area stretch ratio will usually be not more than about 70:1. Particularly preferred area stretch ratios are generally in the range of from 25:1 to 50:1. The area stretch ratio is the overall stretching applied to the film. In ease of a first stretching lengthwise and a subsequent stretching crosswise the area stretch ratio results from multiplying the stretch ratio lengthwise and crosswise f.ex. stretching lengthwise 6:1 and crosswise 8:1 gives an area stretch ratio of 48:1.

The conditions used to effect stretching in the machine direction have been found to have a substantial effect on microvoid formation, lower stretch temperatures and lower stretch ratios usually leading to increased voiding. A preferred temperature range for stretching in the machine direction is from 70 to 110°C, and more preferably from 80 to 90°C, and the stretch ratio used in the machine direction will usually be at least 3:1, a referred range being from 3.5:1 to 8:1.

Subsequent stretching of the films in the transverse direction will in general be effected at lower temperatures than are conventionally used for the transverse stretching of polypropylene films, for example, at from 100 to 160°C. However, it is generally preferred to effect stretching in the transverse direction at temperatures of110° to not more than 150°C and preferably 120° to not more than 145°C in order to produce biaxially stretched films having low densities of 0,5 - 0,8 g/cm³, for example, of less than O.63g/cm³, and high opacity. The stretch ratio used in the transverse direction is preferably from 3:1 to 10:1.

Although further layers on the voided propylene polymer resin layer can be produced by coextrusion of melts of the appropriate polymeric materials followed by biaxial stretching, they can in appropriate cases be applied to the voided propylene polymer resin layer after the latter has been formed. For example, they can be applied by off-line coating techniques.

Either or both surfaces of films in accordance with the present invention can be treated to increase their respective surface energies, for example, using flame or corona discharge treatment.

The following Examples are given by way of illustration only, and do not limit the scope of the invention.

### Examples 1 and 2

Two polymer webs were produced by extruding through a slot die a layer of propylene homopolymer containing 0.1 wt% of a beta-form nucleating agent (N,N'-dicyclohexyl-2, 6-naphthalene dicarboxamide; NJ-Star NU-100, ex New Japan Chemical Co., Ltd.), and in each case, the web was cooled by bringing it into contact with a chill roll having a surface temperature of 100°C.

DSC measurements indicated the homopolymer layer contained a high level of the beta-form of polypropylene with Tₘ of 153°C.

The cooled webs were then stretched 3.5:1 in the direction of extrusion by contacting them with treated rolls at 80°C and having different peripheral speeds to produce opaque mono-axially stretched webs, DSC showing that virtually all of the beta-polypropylene had been converted into the alpha-form.

The mono-axially stretched webs were then stretched 6.0:1 in the transverse direction using a stenter oven at the temperatures shown in Table 1 to produce two biaxially stretched films having thicknesses, densities, and optical densities as shown in Table 1.

### Example 3

Following the procedure of Examples 1 and 2, but coextruding the propylene homopolymer with a layer of a propylene/ethylene copolymer (4 wt% ethylene), produced a two layer polymer web, the propylene homopolymer surface of the web being cooled on a chill roll having a surface temperature of 90°C. Thereafter the web was stretched 4.5:1 in the machine direction using heated rolls with a surface temperature of 90°C and then 6:0:1 in the transverse direction in a stenter oven at 135°C to produce a biaxially oriented film having a thickness of 90.0 µm thick and a single surface layer of the copolymer which was 1 µm thick.

The overall thickness, density, and optical density of the film produced are shown in Table 1.

**Table 1**

| Ex | MD Stretch Ratio (x:1) | MD Stretch Temp (°C) | TD Stretch Temp (°C) | Film Thickness (µm) | Density (g/cm³) | Optical Density |
|---|---|---|---|---|---|---|
| 1 | 3.5 | 80 | 140 | 95.0 | 0.53 | 1.02 |
| 2 | 3.5 | 80 | 134 | 88.5 | 0.52 | 0.97 |
| 3 | 4.5 | 90 | 135 | 90.0 | 0.54 | 0.96 |

All of these films processed satisfactorily during gravure printing.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

United Kingdom Patent Application Number 9705544.6 filed on March 18, 1997 (the priority document of the present application) is hereby incorporated by reference in its entirety.

## Claims

1. A biaxially oriented polyolefin film having a thickness of at least 50 µm comprising a layer of a polypropylene-based polymer resin having microvoids therein, the microvoids having been formed by stretching a web containing the beta-form of polypropylene at an area stretch ratio of at least 15:1.

2. A film according to claim 1, wherein the film is a mono-web.

3. A film according to claim 1, which has a further polymeric layer on one surface of the layer of polypropylene-based polymer.

4. A film according to claim 1, which has a further polymeric layer on both surfaces of the layer of polypropylene-based polymer.

5. A film according to claim 1, wherein the area stretch ratio is at least 20:1.

6. A film according to claim 1, wherein the area stretch ratio is from 30:1 to 45:1.

7. A film according to claim 1, having a thickness of at least 65 µm.

8. A film according to claim 1, having a thickness of at least 80 µm.

9. A film according to claim 1, wherein at least one surface thereof has been treated to increase its surface energy.

10. A film according to claim 3, wherein an intermediate layer is present between the layer of polypropylene-based polymer and the said further polymeric layer.

11. A film according to claim 1, comprising one or more of a slip agent, an antistatic agent, an antiblock agent, a stabilizer, a UV absorber, or a pigment.

12. A method of producing a film as claimed in claim 1, comprising
(a) forming a film comprising a layer of the beta- form of polypropylene, and
(b) biaxially orienting the film at an area stretch ratio of at least 15:1 to form the microvoids.

13. A film according to claim 1, that comprises no void-initiating particles.

14. A film according to claim 1, that comprises no opacifying pigments.

15. A biaxially oriented polyolefin film having a thickness of at least 50 µm comprising an opaque layer of a polypropylene-based polymer resin that includes no void-initiating external particles and no opacifying pigments.
